# FASCICULE DE BREVET EUROPEEN

(11) **EP 1 836 137 B1**
(45) Date de publication et mention de la délivrance du brevet: **23.04.2008**
(21) Numéro de dépôt: 06709402.9
(22) Date de dépôt: 11.01.2006
(51) Int. Cl.: C03B 35/20

(54) **DISPOSITIF ET PROCEDE DE CINTRAGE ET DE REFROIDISSEMENT DE VITRES A DEUX TRAINS DE SUPPORTS**
GLASBIEGUNGS- UND GLASKÜHLUNGSVERFAHREN UND VORRICHTUNG MIT ZWEI TRÄGERZÜGEN
GLASS-BENDING AND COOLING METHOD AND DEVICE COMPRISING TWO SUPPORT TRAINS

(30) Priorité: 13.01.2005 DE 102005001513
(43) Date de publication de la demande: 26.09.2007
(73) Titulaire: SAINT-GOBAIN GLASS FRANCE, 92400 Courbevoie (FR)
(72) Inventeur: BALDUIN, Michael, 52477 Alsdorf (DE); LABROT, Michael, 52072 Aachen (DE); HAVENITH, Hubert, 52146 Wurselen (DE); OLLFISCH, Karl-josef, 52159 Roetgen (DE); RADERMACHER, Herbert, B-4730 Raeren (BE); SCHALL, Günther, 52372 Kreuzau (DE)
(74) Mandataire: Colombier, Christian
(86) Numéro de dépôt international: PCT/FR2006/050014
(87) Numéro de publication internationale: WO 2006/075117

(56) Documents cités:
- EP-A- 1 371 616
- WO-A-93/06052
- WO-A-20/04087590
- DE-B3- 10 314 266
- US-A- 5 071 461
- US-A- 5 651 805
- US-A- 6 009 726
- US-A1- 2005 166 639
- PATENT ABSTRACTS OF JAPAN vol. 006, no. 239 (C-137), 26 novembre 1982 (1982-11-26) -& JP 57 140325 A (ASAHI GLASS KK), 30 août 1982 (1982-08-30)
- PATENT ABSTRACTS OF JAPAN vol. 2000, no. 14, 5 mars 2001 (2001-03-05) -& JP 2000 327352 A (ASAHI GLASS CO LTD), 28 novembre 2000 (2000-11-28)

## Description

L'invention concerne un dispositif pour cintrer une ou plusieurs vitres posées l'une sur l'autre ainsi qu'un procédé pour cintrer une ou plusieurs vitres posées l'une sur l'autre.

Par GB1299384, on connaît une installation de four pour le chauffage de vitres, en particulier pour le cintrage de pare-brise d'automobiles. Les vitres sont déposées sur des moules dans des chariots de moulage spéciaux, les chariots de moulage étant introduits l'un après l'autre dans l'installation de four en tunnel, qui se compose d'une succession de chambres de préchauffage, de chauffage - cintrage et de refroidissement. Les moules sur les chariots de moulage sont introduits à l'entrée du four dans celui-ci, transportés le long d'un chemin à travers celui-ci et extraits du four à la sortie du four. Ensuite, les chariots de moulage sont à nouveau ramenés à l'entrée du four à l'extérieur du four. De cette manière, il se forme un train de chariots avec des moules se trouvant en circuit fermé. L'installation de four se caractérise en ce que les chambres de préchauffage et de chauffage - cintrage sont disposées séparément l'une de l'autre, et qu'il est prévu entre elles un espace pour surveiller et réguler la température des vitres sur les moules.

Le US5902367 enseigne un procédé pour transporter des chariots portant des moules dans un four de cintrage pour des vitres. Le four de cintrage comprend des chambres de préchauffage et plusieurs chambres de cintrage disposées derrière celles-ci ainsi que des chambres de refroidissement disposées en dessous des chambres de préchauffage et de cintrage. Les chariots portant des moules sont donc d'abord guidés l'un après l'autre sur une voie supérieure et transférés sur une voie inférieure après le cintrage par gravité des vitres. Le transport des chariots de moulage s'effectue par étapes, c'est-à-dire qu'ils s'arrêtent pendant un certain temps dans les diverses chambres et qu'ils sont ensuite déplacés en un train. Le transport aller et le transport retour des chariots s'effectue à l'intérieur du four de cintrage, leurs directions de transport étant opposées. Selon le US5902367, les chariots de transport de moules doivent, après leur transfert sur la voie inférieure, être transmis directement à une position en dessous de la première chambre de cintrage ou directement en dessous de la dernière chambre de préchauffage, tandis que les autres chariots de transport de moules sont stationnaires.

Ces derniers temps, les exigences de précision des vitres cintrées n'ont pas cessé de croître et on demande en outre des vitres avec de plus petits rayons de courbure. Pour répondre à ces demandes, il faut dans la plupart des cas, en plus d'un cintrage par la seule gravité comme cela est décrit dans les documents mentionnés plus haut, exécuter une étape de cintrage avec un outil de cintrage supplémentaire. Par le US5713976, on connaît un procédé pour le cintrage d'une paire de vitres avec un outil de cintrage supplémentaire, dans lequel la paire de vitres est d'abord précintrée sous l'action de la gravité sur des moules de cintrage en forme de cadre dans une mesure telle que les vitres viennent s'appliquer avec leur région de bord (région périphérique) entièrement sur le moule de cintrage en forme de cadre. Puis elles sont cintrées à la forme finale souhaitée à l'aide d'un moule de cintrage supérieur à surface pleine dans le champ central situé à l'intérieur de la région de bord, du fait que les deux vitres sont pressées sur le moule de cintrage à surface pleine par aspiration sur le côté périphérique.

Le brevet US-A-5,071,461 enseigne un dispositif de bombage d'une ou plusieurs vitres posées l'une sur l'autre faisant intervenir deux trains de chariots. Le premier train est dévolu à un pré-bombage par gravité et amène les vitres jusqu'à une zone de transfert. Le deuxième train reprend les vitres de la zone de transfert et parcourt un circuit assurant le bombage final des vitres. Ainsi les deux trains de chariot sont nécessairement sensiblement aux mêmes températures.

Le problème à la base de l'invention consiste à procurer un dispositif amélioré et un autre procédé pour cintrer des vitres.

Ce problème est résolu conformément à l'invention par les caractéristiques de la revendication indépendante de dispositif en ce qui concerne le dispositif et par les caractéristiques de la revendication indépendante de procédé en ce qui concerne le procédé. Les revendications subordonnées respectivement aux revendications indépendantes présentent des formes de réalisation avantageuses de l'invention.

Dans la description qui suit, et pour faciliter la compréhension de l'invention, il est possible que des caractéristiques du dispositif soient mélangées avec des caractéristiques du procédé.

Outre une zone de chargement, une section de four et une section de refroidissement final, le dispositif pour cintrer une vitre comprend en outre, selon l'invention, une station de transfert ainsi que deux trains de chariots indépendants, dont les chariots individuels sont équipés de supports de transport différents les uns des autres.

Dans la station de chargement, qui se trouve habituellement à l'extérieur de la section de four, les premiers supports de transport du premier train de chariots peuvent être chargés avec des vitres. Ensuite, les chariots chargés sont transportés dans le four. Le four de chauffage se compose en règle générale de plusieurs chambres de chauffage disposées l'une après l'autre, dans lesquelles les vitres sont portées à leur température de ramollissement nécessaire pour le cintrage. Les chariots individuels séjournent pendant un laps de temps déterminé dans une chambre de chauffage, avant d'être transférés dans la chambre de chauffage suivante. Souvent, le four accueille un nouveau chariot chargé de telle façon que celui-ci pousse les chariots précédents dans une position suivante. Lorsque les chariots sont arrivés dans la station de transfert, les vitres sont reprises de leurs supports de transport. Ensuite, ce chariot est prêt à être chargé avec une nouvelle vitre et il peut à nouveau être envoyé à la station de chargement.

Entre la station de transfert et une section de refroidissement final, qui sert à refroidir de façon appropriée les vitres de leur température de cintrage à une température plus basse, il est prévu un deuxième train de chariots. Celui-ci est équipé de deuxièmes supports de transport, qui sont différents des supports de transport du premier train de chariots. Les chariots du deuxième train circulent entre la station de transfert, dans laquelle les deuxièmes supports de transport sont chargés avec des vitres, à travers la section de refroidissement final et reviennent de nouveau dans la station de transfert. La section de refroidissement final est équipée à son extrémité d'une station de reprise, dans laquelle les vitres cintrées terminées peuvent être reprises des supports de transport.

Par la séparation d'un train de chariots unique selon l'état de la technique en deux trains de chariots séparés avec des supports de transport différents entre eux selon le procédé de l'invention, on peut obtenir plusieurs avantages. D'une part, des supports de transport différents pour les étapes du procédé exécutées avant et après la zone de transfert sont nettement plus simples et plus économiques à fabriquer qu'un outil combiné disposé en commun sur un chariot respectivement un cadre de base. Par ailleurs, ces outils peuvent être mieux adaptés à leurs fonctions respectives, sans devoir accepter des compromis pour des raisons de place insuffisante ou pour cause de transferts de chaleur ralentis par les outils combinés massifs.

On peut enfin, en raison de la séparation du train de chariots, construire un four avec deux zones de température. Dans la région du premier train de chariots, les chariots, les supports de transport et les vitres sont chauffés à une température relativement élevée de cintrage du verre, tandis que dans la région du deuxième train de chariots, la température est en moyenne plus basse. La différence de température entre les supports de transport du premier et du deuxième trains de chariots se trouvant respectivement dans la zone de transfert est comprise entre 100°C et 250°C. Avec le dispositif de l'invention, on peut ainsi d'une part économiser de l'énergie, parce qu'en réalité les éléments à chauffer dans la région du premier train de chariots ne doivent pas être fortement refroidis et ensuite de nouveau chauffés à chaque tour pour la solidification et la reprise des vitres. D'autre part la section de refroidissement final et éventuellement aussi la section de four peuvent être plus courtes que dans les installations de four selon l'état de la technique, parce qu'il faut vaincre de moins grandes différences de température.

Il se produit en plus un autre effet souhaitable, les vitres cintrées terminées présentent notamment, par rapport aux vitres qui sont fabriquées dans des installations de four selon l'état de la technique, des valeurs de contraintes de bord améliorées. En raison de la température réduite des deuxièmes supports de transport lors de la reprise des vitres dans la zone de transfert, le refroidissement dans la région du bord et dans la région centrale des vitres peut être plus uniforme, parce que les chariots et les supports de transport usuellement constitués de métal "réchauffent" moins fortement la région du bord des vitres.

Les supports de transport sur les chariots individuels du premier train de chariots peuvent présenter toute structure appropriée. On peut par exemple employer des moules concaves ou les vitres peuvent être posées sur des tissus ou des tricots flexibles les équipant. Selon l'invention, on utilise cependant de préférence des moules de cintrage en forme de cadre, dans lesquels les vitres ne sont supportées que sur leur pourtour ou à une faible distance de celui-ci. Pendant leur cheminement à travers la section de four, les vitres sont chauffées à leur température de cintrage et épousent par conséquent dans leurs régions de contact avec le moule de cintrage en forme de cadre le contour de la surface de contact. Ce cintrage peut par exemple se poursuivre jusqu'à ce que le cintrage final désiré des vitres soit déjà atteint. Lorsqu'il faut toutefois obtenir des formes compliquées des vitres, il est souvent plus favorable de ne réaliser qu'un précintrage sous l'action de la gravité et de ne réaliser la forme finale du verre qu'au cours d'une étape de cintrage ultérieure. A cet effet, les premiers supports de transport sont alors des moules de précintrage, dont les surfaces de contact avec les vitres ne correspondent pas à la forme finale du verre.

Les moules de cintrage en forme de cadre disposés sur les chariots du premier train de chariots pour le précintrage ou le cintrage final peuvent être aussi bien rigides (leur forme ne varie pas au cours du bombage) que variables. Un tel moule de cintrage en forme de cadre variable en fonction de la progression du cintrage par gravité est connu par exemple par le US5660609. Ce dispositif de cintrage pour le cintrage de vitres par gravité présente un cadre de précintrage et un cadre de cintrage principal qui sont disposés l'un par rapport à l'autre de telle façon que, par changement de leur position l'un par rapport à l'autre, la vitre précintrée sur le cadre de précintrage soit reprise par le cadre de cintrage principal et soit cintrée sur celui-ci à sa forme finale. Le cadre de précintrage est formé par un anneau rigide fermé et, pendant l'opération de transfert de la vitre sur le cadre de cintrage principal, il est supporté de manière pivotante autour d'un axe situé dans le plan de symétrie. De cette manière, on évite une action asymétrique des efforts de cintrage sur la vitre.

Selon une forme de réalisation préférée du dispositif de l'invention, les supports de transport du deuxième train de chariots présentent dans leur région de bord (ou région périphérique) la forme des vitres cintrées finales. De cette manière, on empêche que le profil de cintrage se modifie pendant que les vitres se refroidissent en dessous de leur température de déformation. Pour ce type de supports de transport, on a obtenu de bons résultats avec des anneaux en forme de cadre, qui soutiennent les vitres uniquement dans leurs régions de bord (en périphérie). Bien entendu, l'utilisation d'autres types de supports de transport est également possible, comme par exemple des moules pleins, dont la surface de contact correspond à la surface totale des vitres cintrées.

Par l'expression "chariot" du premier et du deuxième "trains de chariots", l'invention ne doit en aucun cas être limitée à des dispositifs de transport munis de roues. De même, l'expression "train de chariots" ne comprend pas uniquement des chariots couplés les uns aux autres. Au contraire, les "chariots" peuvent être mus par toute technique appropriée, ils peuvent être entraînés individuellement, et des chariots isolés ou en groupes peuvent être poussés ou tirés à travers l'installation de four. Les "chariots" peuvent par exemple être supportés par des roues, des coussins d'air ou des patins de glissement. Il est également possible de fixer les supports de transport sur un châssis, qui est en prise avec une chaîne ou qui est déposé sur une bande, de telle façon que les supports de transport soient déplacés par le mouvement de la chaîne ou de la bande. Dans cette dernière solution en particulier, la masse à chauffer et/ou à refroidir des "chariots" peut être fortement réduite, de sorte qu'une telle construction présente des avantages énergétiques.

Naturellement, bien que les dispositifs de transport soient en principe indépendants, les opérations de transport des deux côtés de la zone de transfert sont de préférence synchronisées ou accordées l'une par rapport à l'autre de telle façon que, au moment du transfert d'une vitre concrète du premier train de chariots vers le deuxième train de chariots, un chariot soit dans tous les cas prêt à recevoir la vitre cintrée.

De façon particulièrement avantageuse, des outils de cintrage connus en soi pour les vitres peuvent être disposés à l'intérieur de la zone de transfert, avec lesquels celles-ci peuvent, à la suite d'un cintrage effectué sur les supports de transport du premier train de chariots, subir un cintrage complémentaire respectivement final pendant le transport à travers la section de four. Comme outils de cintrage, on connaît par exemple des moules de cintrage concaves (inférieurs) ou convexes (supérieurs) en forme de cadre et/ou des moules de cintrage concaves (inférieurs) ou convexes (supérieurs) à surface pleine. Il est également possible qu'un outil de cintrage inférieur coopère avec un outil de cintrage supérieur et exécute ainsi une étape de cintrage dite par pressage. Les supports de transport du premier train de chariots peuvent également servir de moules inférieurs.

Etant donné que le dispositif de l'invention présente deux trains de chariots séparés l'un de l'autre, dont les chariots portent des supports de transport différents, il faut un dispositif de transfert pour transférer les vitres des premiers supports de transport aux deuxièmes supports de transport. Ce dispositif de transfert est disposé à l'intérieur de la zone de transfert. Le transfert à partir des premiers supports de transport ne doit pas être effectué immédiatement vers les deuxièmes supports de transport, puisque les vitres sont moulées au cours d'une opération de cintrage effectuée entre le moment où les vitres quittent le premier train et le moment ou elle arrivent sur le deuxième train. Comme dispositif de transfert, on peut utiliser par exemple le moule de transfert à surface concave enseigné par le WO2004087589. L'étendue de celui-ci est plus petite que l'étendue d'un premier support de transport en forme de cadre, de sorte qu'il peut passer à travers ce dernier et ainsi reprendre les vitres.

On préfère cependant particulièrement un dispositif de transfert servant de moule supérieur, avec lequel les vitres peuvent être soulevées et maintenues par aspiration sur leur bord. Un tel dispositif est divulgué par exemple dans le US5713976 cité dans l'introduction. Ce dispositif de transfert dispose d'une surface d'appui convexe, à surface pleine ou en forme de cadre, pour les vitres, avec un pourtour qui correspond sensiblement au contour extérieur des vitres. A une certaine distance de ce contour, il est prévu une sorte de jupe telle qu'il se forme une fente à travers laquelle l'air peut être aspiré. Lorsqu'elles sont positionnées en dessous du dispositif de transfert en étant posées sur leur support de transport, les vitres sont aspirées, soulevées et maintenues par suite de l'écoulement ainsi créé. Si les forces d'aspiration sont suffisamment élevées et que le dispositif de transfert possède une surface d'appui formant un moule à surface pleine, les vitres peuvent être pressées contre ce moule supérieur et ainsi être cintrées.

Dans une autre forme de réalisation de l'invention, le moule supérieur faisant office de dispositif de transfert peut être déplacé horizontalement entre une position située au-dessus d'un premier support de transport du premier train de chariots et une position située au-dessus d'un deuxième support de transport du deuxième train de chariots et sur sa course transférer la vitre soulevée du premier support de transport au deuxième support de transport et la déposer sur celui-ci.

Outre la possibilité déjà mentionnée de presser les vitres entre le moule supérieur et un dispositif de cintrage inférieur, qui peut aussi être formé par le premier support de transport, le dispositif de l'invention est pourvu, selon une variante préférée, d'un moule de cintrage inférieur supplémentaire sur lequel les vitres sont transférées à partir du premier chariot de transport pour un cintrage additionnel au moyen du moule supérieur. Par ailleurs, il est prévu à proximité du moule supérieur un deuxième moule supérieur pour le transfert des vitres du moule inférieur à un deuxième support de transport du deuxième train de chariots à la suite de l'opération de cintrage. Outre sa fonction de cintrage, le moule de cintrage inférieur assure aussi le transport des vitres entre le premier et le deuxième moule supérieur, en occupant en alternance une position en dessous des deux moules supérieurs. Les deux moules supérieurs peuvent être identiques ou différents l'un de l'autre, par exemple lorsqu'un des moules ne sert qu'à soulever et transférer les vitres et qu'un autre moule sert en plus pour le pressage des vitres contre le moule inférieur. Pour le pressage des vitres, le moule supérieur et le moule inférieur doivent naturellement être mobiles verticalement l'un par rapport à l'autre.

Notamment, le cintrage peut-être du type de celui décrit dans la demande internationale PCT/FR2005/051093, modifié en ce qu'un premier train de support apporte les vitres jusqu'à la cellule de transfert dans laquelle est effectuée ledit cintrage, un second train de supports, différent du premier, récupérant les vitres pour les emmener vers le refroidissement.

D'une manière particulièrement avantageuse, le dispositif peut être pourvu d'un moule inférieur, qui présente une surface de contact concave à surface pleine pour les vitres déposées dessus, et qui est pourvu de moyens pour produire une différence de pression pour presser les vitres sur la surface de contact. La différence de pression est en l'occurrence appliquée par exemple par aspiration à travers des trous ou des passages percés dans la surface de contact. Avant ou pendant l'aspiration, il est possible au besoin d'effectuer un pressage supplémentaire du bord ou de la surface complète des vitres. Un tel moule concave à surface pleine est enseigné par exemple dans le W002064519.

L'invention peut également être mise en oeuvre en réalisant un cintrage principal dans la cellule de transfert sur le principe de celui enseigné par le W02004/087590. Dans ce cas, un prébombage par gravité du verre en feuille est d'abord effectué sur un premier support de transport en forme de moule du type squelette, appartenant au premier train de transport, puis, le verre est enlevé dudit premier support par une contreforme femelle se soulevant et prenant le verre au passage pour ensuite le faire venir au contact dans sa région centrale avec une forme mâle supérieure, exerçant ensuite une phase de pressage du verre dans sa région périphérique entre la forme mâle et la contreforme femelle, puis une phase d'aspiration est exercée sur le verre au travers de la forme mâle, le pressage étant maintenu, ladite aspiration n'étant pas déclenchée avant que la première feuille ne vienne en contact avec la forme mâle, puis le pressage est arrêté par écartement de la forme mâle de la contreforme femelle, le verre restant en contact avec la forme mâle sous l'effet d'une force d'aspiration au moins partiellement exercée par une jupe entourant la forme mâle, puis pendant que le verre est en contact avec la forme mâle sous l'effet de la force d'aspiration, un support de transport du deuxième train pour le refroidissement est amené sous le verre, puis la force d'aspiration est stoppée de façon à laisser reposer le verre sur ledit support de transport du deuxième train, puis ledit support de transport du deuxième train emmène le verre pour une étape de refroidissement du verre en dehors de la cellule de bombage, dans la zone de refroidissement.

Avec le dispositif selon l'invention, on peut cintrer simultanément aussi bien des vitres individuelles que plusieurs, en particulier deux, vitres posées l'une sur l'autre. La condition requise pour le cintrage simultané d'un paquet de vitres est la présence d'un dispositif de transfert approprié. Les deux dispositifs de transfert décrits plus haut permettent dans tous les cas aussi de soulever des paquets de vitres du premier dispositif de transport, de les maintenir, de les transférer à un dispositif de cintrage ou au deuxième dispositif de transport respectivement de les transférer du dispositif de cintrage au deuxième dispositif de transport. Pour la fabrication de vitres feuilletées cintrées, il est en règle générale nécessaire de cintrer simultanément en superposition les vitres individuelles.

Le dispositif conforme à l'invention peut aussi, pour un faible coût, être transformé de façon à permettre un fonctionnement selon l'état de la technique, donc seulement avec un seul train de chariots et un seul type de supports de transport. Dans ce cas, il est simplement nécessaire de procurer une possibilité de circulation des chariots de la section de four à travers la zone de transfert directement vers la station de refroidissement final.

D'autres détails et avantages de l'objet de l'invention découleront, sans la moindre intention de limitation, des dessins d'exemples de réalisation de dispositifs de cintrage selon la présente invention, et de leur description détaillée qui va suivre.

Dans ces dessins, en représentation simplifiée sans échelle particulière,
La figure 1 est une vue schématique d'un dispositif de cintrage;
La figure 2 montre une première forme de réalisation avec un dispositif de transfert, représentée en coupe; et
La figure 3 montre une deuxième forme de réalisation représentée en coupe, avec un moule de cintrage inférieur par aspiration disposé dans la zone de transfert.

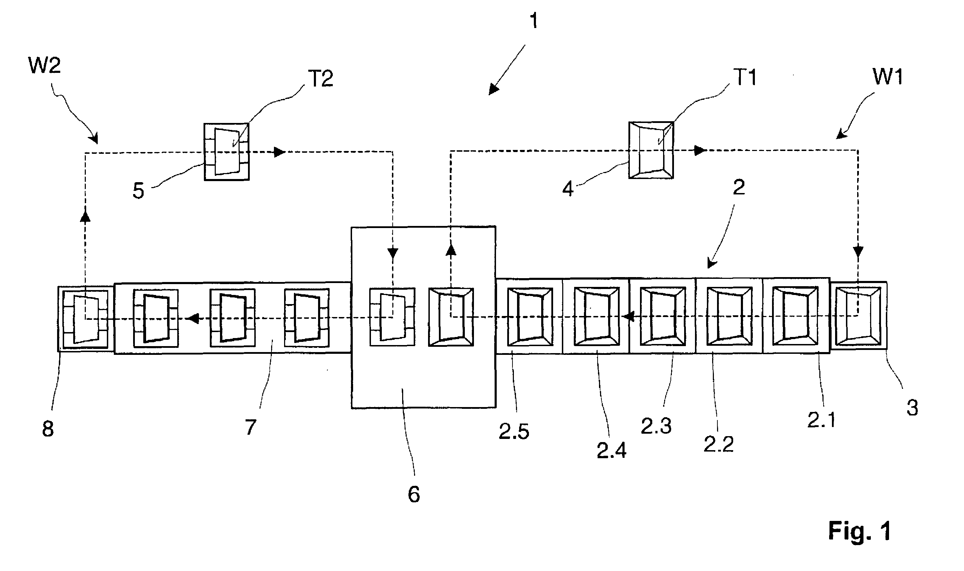

Selon la figure 1, un dispositif 1 selon l'invention pour cintrer des vitres se compose d'une section de four 2 pour chauffer les vitres à leur température de ramollissement, précédée d'une zone de chargement 3. La section de four 2 se compose de plusieurs zones de chauffage 2.1 à 2.5 disposées l'une derrière l'autre, avec des puissances de chauffage réglables et régulables séparément. De cette manière, on peut régler un profil de température désiré le long du trajet à travers la section de four. A la suite de la section de four 2 se trouve une zone de transfert 6. Les chariots 4 circulent en partant de la zone de chargement 3 à travers la section de four 2 vers la zone de transfert 6 puis retour à la zone de chargement, et forment ainsi un train de chariots W1 en circulation. Les chariots individuels 4 portent des supports de transport T1, qui peuvent recevoir les vitres. Les supports de transport sont dans ce cas en forme de cadres pour précintrer les vitres sous l'influence de la gravité.

A l'intérieur de la section de four 2, les chariots sont transportés à faible distance l'un de l'autre en se poussant à travers les diverses zones de chauffage 2.1 à 2.5, tout en séjournant un certain temps dans les diverses zones de chauffage.

Le retour des chariots 4 représenté ici latéralement à la section de four 2 n'est pas contraignant. Bien entendu, le retour des chariots peut aussi se faire en dessous de la section de four, comme cela est décrit par exemple dans le document EP 0 736 498 B1. Une telle disposition peut être avantageuse aux points de vue thermique et énergétique.

Dans la zone de transfert 6, dans laquelle sont disposés des outils de transport et/ou de cintrage non représentés ici, les vitres sont reprises des supports de transport T1. A la suite de la zone de transfert 6, il se trouve une section de refroidissement final 7, qui débouche dans une station de déchargement 8. Les chariots 5 porteurs des supports de transport T2 forment un train de chariots W2, qui circule entre la zone de transfert 6, à travers la zone de refroidissement final 7 vers la station de déchargement 8 puis de nouveau dans la zone de transfert 6. Les supports de transport T2 sont différents des supports de transport T1 servant pour le précintrage. Ils possèdent une surface de contact avec les vitres en forme de cadre, qui correspond au contour désiré des vitres cintrées terminées. Le dispositif de cintrage 1 est donc équipé de deux trains de chariots W1 et W2 séparés l'un de l'autre, dont les chariots sont chaque fois équipés de supports de transport différents T1 et T2 pour les différentes étapes du procédé.

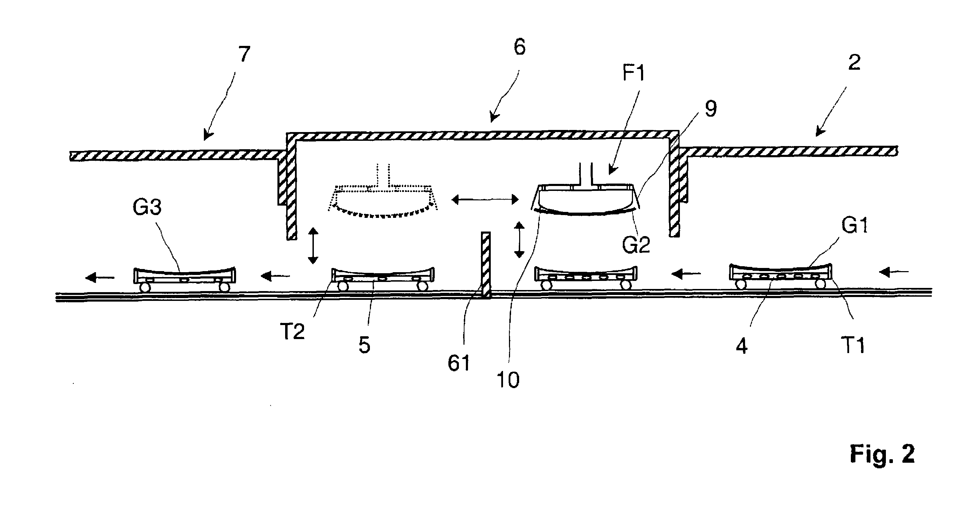

La figure 2 montre une représentation en coupe d'un dispositif de cintrage de la Figure 1, sous forme d'un fragment dans la région de la zone de transfert 6. Un chariot 4 est arrivé à l'extrémité de la section de four 2 et porte sur un support de transport T1 un paquet de vitres déjà précintré G1 composé de deux vitres superposées. Un chariot précédent se trouve dans la zone de transfert 6 et a déjà été déchargé au moyen d'un moule supérieur F1 disposé dans la zone de transfert.

Le moule F1 possède une surface de moulage 10 convexe et pleine, orientée vers le bas, sur laquelle un paquet de vitres G2 est venu s'appliquer. Contournant la surface de moulage 10 et les côtés du paquet de vitres G2, il est prévu une jupe 9 formant une fente périphérique. Les paquets de vitres déposés sur les supports de transport T1 peuvent être soulevés et maintenus par aspiration d'air à travers cette fente périphérique. Pendant leur application contre la surface de cintrage 10, les paquets de vitres peuvent être cintrés à une forme désirée en raison de la différence de pression existante. Au besoin, la différence de pression peut être accrue, en exerçant une dépression sur les vitres déposées à travers des orifices dans la surface de cintrage 10.

Le moule F1 est mobile verticalement en direction du support de transport T1 jusqu'à une faible distance de celui-ci, pour faciliter la réception du paquet de vitres G2. Il est également possible de presser le paquet de vitres G2 entre le support de transport T1 et le moule F1 pour obtenir un tracé de cintrage amélioré ou de plus petits rayons de courbure. Dans sa position supérieure, le moule F1 est déplaçable horizontalement, de telle façon qu'il puisse être positionné au-dessus d'un chariot 5 du deuxième train de chariots W2 avec un support de transport T2 déposé dessus. Dans le dessin, le moule F1 est représenté en traits interrompus dans cette position avec le paquet de vitres cintrées terminées. Après un déplacement vertical jusqu'à une courte distance au-dessus du support de transport T2, le paquet de vitres est déposé sur celui-ci. Dans la section de refroidissement final 7, il se trouve déjà un autre chariot du train de chariots W2 avec un paquet de vitres cintrées terminées G3 déposé dessus.

La zone de transfert 6 est divisée en deux zones avec une paroi d'isolation thermique 61. De cette manière, les trains de chariots W1 et W2, qui peuvent présenter des différences de température atteignant 250°C, sont au moins partiellement séparés thermiquement l'un de l'autre. Pour une meilleure séparation thermique, on peut également utiliser des cloisons isolantes mobiles, qui séparent entièrement la zone de transfert et qui libèrent un passage pour le moule lorsque c'est nécessaire par un glissement vertical ou horizontal.

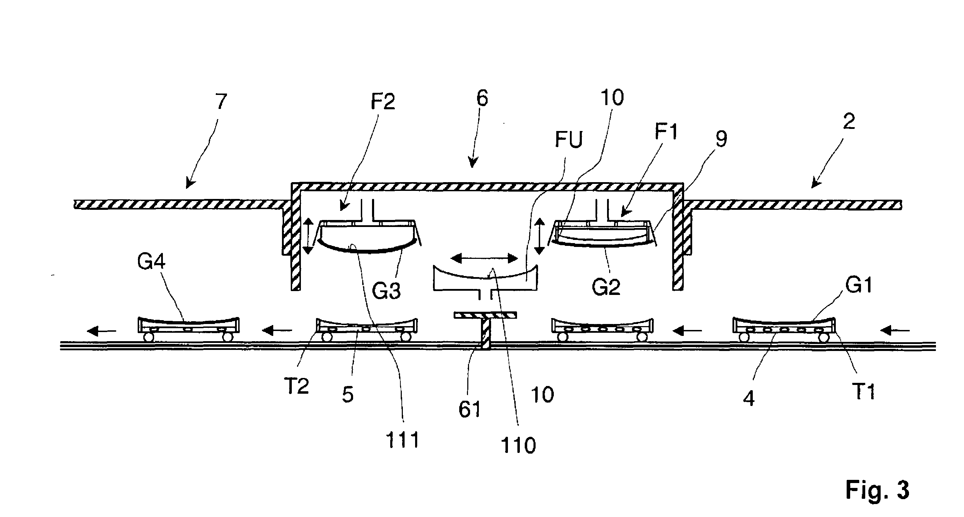

Les guides et les entraînements pour le moule F1 et les chariots 4 et 5 ne sont pas représentés ici et dans la description de la Figure 3 qui suit, par souci de simplification.

Selon la figure 3, une variante du dispositif de l'invention est équipée de deux moules supérieurs F1 et F2 ainsi que d'un moule inférieur FU. Le moule inférieur FU présente une surface de cintrage concave pleine 110, qui est pourvue de trous ou de passages percés non représentés. Par ces orifices, on peut appliquer une dépression aux vitres reposant sur la surface de cintrage, de sorte que les vitres s'appliquent sur la surface de cintrage 110 au moyen de la différence de pression en conjonction avec la pression ambiante.

L'entrée et la sortie des chariots 4 et 5 ainsi que le soulèvement des paquets de vitres précintrées et le dépôt des paquets de vitres cintrées terminées sont effectués comme cela est décrit en relation avec la Figure 2, on n'y reviendra pas en détail ici.

Les moules F1 et F2 ne sont mobiles que verticalement. Après que le paquet de vitres G2 ait été soulevé du support de transport T1 par aspiration autour des côtés périphériques et qu'il ait été maintenu sur la surface de cintrage 10 du moule F1, le moule inférieur FU se déplace en direction horizontale sous le moule F1. Ensuite le moule F1 descend jusqu'à une courte distance au-dessus du moule FU et le paquet de vitres G2 est déposé sur le moule FU. A présent, une dépression agit sur les vitres à travers la surface de cintrage 110, de telle façon que celles-ci soient pressées contre la surface de cintrage 110. Au besoin, le paquet de vitres G2 peut aussi être pressé entre les moules F1 et FU avant ou pendant la durée d'action de la dépression. Ensuite, le moule FU se déplace horizontalement jusqu'en dessous du moule F2, qui peut soulever un paquet de vitres cintrées terminées G3 du moule FU et, après que le moule FU ait libéré le chemin entre le moule F1 et le support de transport T2, le déposer sur le support de transport T2 pour son transport vers la section de refroidissement final 7.

Dans la forme de réalisation du dispositif de cintrage selon la figure 3 également, la zone de transfert 6 est divisée en deux zones par une paroi d'isolation thermique 61. De cette manière, les trains de chariots W1 et W2, qui peuvent présenter des différences de température atteignant 250°C, sont au moins partiellement séparés thermiquement l'un de l'autre. Dans ce cas également, on peut utiliser des cloisons isolantes mobiles pour une meilleure séparation thermique, comme on l'a déjà mentionné dans la description de la figure 2.

Les moules F1 et F2 sont différents les uns des autres et sont ainsi adaptés à des fonctions différentes.

Le moule F1 ne possède pas une surface de contact 10 pleine, mais une surface annulaire pour le paquet de vitres G2. D'une part, celle-ci suffit pour soulever, maintenir et transférer les paquets de vitres sur le moule de cintrage par aspiration inférieur FU, d'autre part la forme annulaire permet une opération de pressage économique en coopération avec le moule FU à surface pleine, qui ne se produit que dans la région de bord, tandis que le cintrage désiré est obtenu dans la surface située à l'intérieur de la forme annulaire, à l'aide de la différence de pression produite par le moule FU. Eventuellement, on peut supprimer une opération de pressage "correcte", du fait que la surface de contact 10 du moule F1 n'amène en application sur la surface de cintrage 110 du moule FU, le long de son bord périphérique, que le paquet de vitres positionné sur le moule FU et obture ainsi le bord de celui-ci. De cette manière, on peut produire avec un moindre coût la dépression agissant sur la face inférieure du paquet de vitres à travers les orifices dans le moule FU ou au total une plus grande différence de pression.

Le moule F2 est au contraire doté d'une surface de cintrage convexe pleine 111 correspondant au cintrage final désiré de la vitre. De cette manière, on empêche que la forme des vitres encore ramollies change encore une fois pendant la reprise du moule FU, le maintien sur le moule F2 et le transfert sur les supports de transport T2.

## Revendications

1. Dispositif pour cintrer une vitre ou plusieurs vitres posées l'une sur l'autre, avec
- un premier train de chariots (W1), portant des supports de transport (T1) et circulant entre une zone de chargement (3), dans laquelle au moine une vitre est déposée sur un support de transport (T1) d'un chariot (4), et une zone de transfert (6),
- une section de four (2) chauffant les vitres à leur température de cintrage sur leur chemin vers la zone de transfert (6), et
- un deuxième train de chariots (W2) circulant à travers une section de refroidissement final (7), entre la zone de transfert (6) et une station de déchargement (8), avec des supports de transport (T2) pour les vitres cintrées différents des supports de transport (T1) du premier train de chariots (W1).

2. Dispositif selon la revendication précédente, **caractérisé en ce que** dans la zone de transfert (6) les supports de transport (T2) sont à plus basse température que les supports de transport (T1).

3. Dispositif selon l'une des revendications précédentes, **caractérisé en ce que** les supports de transport (T1) du premier train de chariots (W1) sont des moules de cintrage en forme de cadre avec une surface de contact pour le cintrage de vitres sous l'effet de la gravité.

4. Dispositif selon la revendication précédente, **caractérisé en ce que** les supports de transport (T1) du premier train de chariots (W1) sont des moules de précintrage en forme de cadre.

5. Dispositif selon l'une des deux revendications précédentes, **caractérisé en ce que** les surfaces de contact des moules de cintrage ou de précintrage en forme de cadre sont réalisées avec une forme variable, le changement de forme pouvant être commandé en particulier sur leur chemin à travers la section de four (2).

6. Dispositif selon l'une quelconque de revendications précédentes, **caractérisé en ce que** la surface de contact des supports de transport (T2) du deuxième train de chariots (W2) a la forme des vitres cintrées terminées.

7. Dispositif selon l'une quelconque des revendications précédentes, **caractérisé en ce qu'**il est prévu des outils de cintrage (F1, FU) dans la zone de transfert (6).

8. Dispositif selon l'une quelconque des revendications précédentes, **caractérisé en ce que** les supports de transport (T1) du premier train de chariots (W1) sont déplaçables en dessous d'un moule supérieur (F1) dans la zone de transfert (6), qui est équipé de moyens (9) pour aspirer les vitres par leur bord, pour transférer les vitres par soulèvement et maintien à partir d'un support de transport (T1).

9. Dispositif selon la revendication précédente, **caractérisé en ce que** le moule supérieur (F1) est convexe et sert d'outil de cintrage pour cintrer les vitres.

10. Dispositif selon l'une des deux revendications précédentes, **caractérisé en ce qu'**un moule inférieur concave (FU) peut être positionné en dessous du moule supérieur (F1) maintenant les vitres, le moule inférieur (FU) et le moule supérieur (F1) étant mobiles l'un par rapport à l'autre de telle façon que les vitres puissent être pressées entre eux.

11. Dispositif selon l'une des revendications précédentes, **caractérisé en ce que** les supports de transport (T2) du deuxième train de chariots (W2) sont déplaçables en dessous d'un moule supérieur (F1, F2), qui est équipé de moyens (9) pour aspirer les vitres par leur bord, afin de maintenir les vitres et de les transférer sur les supports de transport (T2).

12. Dispositif selon la revendication précédente, **caractérisé en ce qu'**un moule supérieur (F1) est déplaçable horizontalement dans une première position au-dessus d'un chariot de transport (T1) du premier train de chariots (W1) et dans une deuxième position au-dessus d'un chariot de transport (T2) du deuxième train de chariots (W2).

13. Dispositif selon la revendication 10,
**caractérisé en ce qu'**il est prévu deux moules supérieurs (F1, F2) différents l'un de l'autre.

14. Dispositif selon la revendication précédente,
**caractérisé en ce que**
- les deux moules (F1, F2) sont voisins,
- il est prévu un moule inférieur concave (FU),
- le moule inférieur concave (FU) peut être positionné en alternance sous les moules supérieurs (F1, F2), et
- le moule inférieur (FU) et un des moules supérieurs (F1, F2) sont déplaçables l'un par rapport à l'autre de telle façon que les vitres puissent être pressées entre eux et/ou transférées sur un support de transport (T2) et/ou reprises d'un support de transport (T1) .

15. Dispositif selon l'une quelconque des revendications 9 à 13, **caractérisé en ce que** le moule inférieur concave (FU) a une surface pleine et est pourvu de moyens pour aspirer les vitres sur leur surface de cintrage (110).

16. Procédé pour cintrer au moins une vitre, comprenant les étapes suivantes
- déposer les vitres sur un support de transport (T1) d'un premier train de chariots (W1), qui circule entre une zone de chargement (3) et une zone de transfert (6),
- chauffer les vitres à leur température de cintrage et les cintrer ou les précintrer pendant leur transport vers la zone de transfert (6), et
- transférer les vitres sur un support de transport (T2) d'un deuxième train de chariots (W2), différent du premier support de transport (T1), lequel deuxième train de chariots (W2) circule à travers une section de refroidissement final (7), entre la zone de transfert (6) et une station de déchargement (8).

17. Procédé selon la revendication précédente, **caractérisé en ce que** dans la zone de transfert (6) le support de transport (T2) est à plus basse température que le support de transport (T1).

18. Procédé selon la revendication précédente, **caractérisé en ce que** la différence de température entre le support de transport (T2) et le support de transport (T1) se trouvant respectivement dans la zone de transfert est comprise entre 100°C et 250°C.

19. Procédé selon l'une des revendications précédentes de procédé, **caractérisé en ce que** la section de refroidissement final sert à refroidir la vitre à une température plus basse que la température de cintrage.

20. Procédé selon l'une des revendications précédentes de procédé, **caractérisé en ce que** les vitres sont cintrées au moyen d'au moins un autre outil de cintrage (F1, FU) disposé à l'intérieur de la zone de transfert (6).

21. Procédé selon l'une des revendications précédentes de procédé, **caractérisé en ce que** les vitres sont transférées du premier support de transport (T1) au deuxième support de transport (T2) et/ou du premier support de transport (T1) à l'outil de cintrage (FU) et/ou de l'outil de cintrage (FU) au deuxième support de transport (T2) par aspiration des vitres sur leur bord.

22. Procédé selon l'une des deux revendications précédentes, **caractérisé en ce que** les vitres sont précintrées sur un moule de cintrage en forme de cadre sur leur chemin entre la zone de chargement (3) et la zone de transfert (6) et cintrées à leur forme finale dans la zone de transfert (6).

23. Procédé selon l'une des revendications précédentes de procédé, **caractérisé en ce que** la vitre est cintrée à sa forme finale dans la zone de transfert (6) par aspiration sur un moule inférieur concave (FU) à surface pleine.

24. Procédé selon l'une des revendications précédentes de procédé, **caractérisé en ce que** deux vitres posées l'une sur l'autre et se recouvrant exactement sont cintrées simultanément.

## Claims

1. A device for bending a glazing unit or several glazing units positioned one on top of the other, with
- a first train of carriages (W1), bearing transport supports (T1) and running between a loading zone (3) in which at least one glazing unit is deposited on a transport support (T1) of a carriage (4) and a transfer zone (6),
- a furnace section (2) heating the glazing units to their bending temperature in their path towards the transfer zone (6), and
- a second train of carriages (W2) running through a final cooling section (7), between the transfer zone (6) and an unloading station (8), with transport supports (T2) for the bent glazing units that differ from the transport supports (T1) of the first train of carriages (W1).

2. The device as claimed in the preceding claim,
**characterized in that**, in the transfer zone (6), the transport supports (T2) are at a lower temperature than the transport supports (T1).

3. The device as claimed in either of the preceding claims, **characterized in that** the transport supports (T1) of the first train of carriages (W1) are frame-shaped bending molds with a contact surface for bending glazing units under the effect of gravity.

4. The device as claimed in the preceding claim,
**characterized in that** the transport supports (T1) of the first train of carriages (W1) are frame-shaped prebending molds.

5. The device as claimed in one of the two preceding claims, **characterized in that** the contact surfaces of the frame-shaped bending or prebending molds are produced with a variable shape, it being possible for their shape to be changed particularly along their path through the furnace section (2).

6. The device as claimed in any one of the preceding claims, **characterized in that** the contact surface of the transport supports (T2) of the second train of carriages (W2) has the shape of the finished bent glazing units.

7. The device as claimed in any one of the preceding claims, **characterized in that** bending tools (F1, FU) are provided in the transfer zone (6).

8. The device as claimed in any one of the preceding claims, **characterized in that** the transport supports (T1) of the first train of carriages (W1) can be moved under an upper mold (F1) in the transfer zone (6), which mold is equipped with means (9) for sucking the glazing units via their edge, in order to transfer the glazing units by lifting and holding them from a transport support (T1) .

9. The device as claimed in the preceding claim, **characterized in that** the upper mold (F1) is convex and acts as a bending tool for bending the glazing units.

10. The device as claimed in one of the two preceding claims, **characterized in that** a concave lower mold (FU) can be positioned under the upper mold (F1) holding the glazing units, the lower mold (FU) and the upper mold (F1) being able to move one with respect to the other in such a way that the glazing units can be pressed between them.

11. The device as claimed in one of the preceding claims, **characterized in that** the transport supports (T2) of the second train of carriages (W2) can be moved under an upper mold (F1, F2) which is equipped with means (9) for sucking the glazing units via their edge so as to hold the glazing units and transfer them onto the transport supports (T2).

12. The device as claimed in the preceding claim, **characterized in that** an upper mold (F1) can be moved horizontally into a first position above a transport carriage (T1) of the first train of carriages (W1) and into a second position above a transport carriage (T2) of the second train of carriages (W2) .

13. The device as claimed in claim 10, **characterized in that** two upper molds (F1, F2) that differ from one another are provided.

14. The device as claimed in the preceding claim, **characterized in that**
- the two molds (F1, F2) are adjacent,
- a concave lower mold (FU) is provided,
- the concave lower mold (FU) can be positioned alternately under the upper molds (F1, F2), and
- the lower mold (FU) and one of the upper molds (F1, F2) can be moved one relative to the other in such a way that the glazing units can be pressed between them and/or transferred onto a transport support (T2) and/or taken up from a transport support (T1).

15. The device as claimed in any one of claims 9 to 13, **characterized in that** the concave lower mold (FU) has a solid surface and is provided with means for sucking the glazing units onto their bending surface (110).

16. A method for bending at least one glazing unit, comprising the following steps
- depositing the glazing units on a transport support (T1) of a first train of carriages (W1) which runs between a loading zone (3) and a transfer zone (6),
- heating the glazing units to their bending temperature and bending or prebending them while they are being transported towards the transfer zone (6), and
- transferring the glazing units onto a transport support (T2) of a second train of carriages (W2) which differs from the first transport support (T1), which second train of carriages (W2) runs through a final cooling zone (7), between the transfer zone (6) and an unloading station (8).

17. The method as claimed in the preceding claim, **characterized in that**, in the transfer zone (6), the transport support (T2) is at a lower temperature than the transport support (T1).

18. The method as claimed in the preceding claim, **characterized in that** the difference in temperature between the transport support (T2) and the transport support (T1) lying respectively in the transfer zone is between 100°C and 250°C.

19. The method as claimed in one of the preceding method claims, **characterized in that** the final cooling section is used to cool the glazing unit to a temperature below the bending temperature.

20. The method as claimed in one of the preceding method claims, **characterized in that** the glazing units are bent using at least one other bending tool (F1, FU) positioned inside the transfer zone (6) .

21. The method as claimed in one of the preceding method claims, **characterized in that** the glazing units are transferred from the first transport support (T1) to the second transport support (T2) and/or from the first transport support (T1) to the bending tool (FU) and/or from the bending tool (FU) to the second transport support (T2) by suction applied to the edges of these glazing units.

22. The method as claimed in one of the two preceding claims, **characterized in that** the glazing units are prebent in a frame-shaped bending mold in their path between the loading zone (3) and the transfer zone (6) and are bent to their final shape in the transfer zone (6).

23. The method as claimed in one of the preceding method claims, **characterized in that** the glazing unit is bent to its final shape in the transfer zone (6) by suction onto a concave lower mold (FU) with a solid surface.

24. The method as claimed in one of the preceding method claims, **characterized in that** two glazing units placed one upon the other and overlapping exactly are bent at the same time.

## Patentansprüche

1. Vorrichtung zum Biegen einer Glasscheibe oder mehrerer übereinander liegender Glasscheiben mit
- einer ersten Kette (W1) aus Wagen, die Transportträger (T1) tragen und zwischen einem Aufgabebereich (3), in welchem mindestens eine Glasscheibe auf einem Transportträger (T1) eines Wagens (4) abgelegt wird, und einem Übergabebereich (6) umlaufen,
- einem Ofenabschnitt (2), in welchem die Glasscheiben auf Biegetemperatur auf ihrem Weg zu dem Übergabebereich (6) erhitzt werden, und
- einer zweiten Wagenkette (W2), die zwischen dem Übergabebereich (6) und einer Entnahmestation (8) durch einen abschließenden Kühlabschnitt (7) läuft, mit Transportträgern (T2) für die einzelnen gebogenen Glasscheiben der Transportträger (T1) der ersten Wagenkette (W1).

2. Vorrichtung nach dem vorhergehenden Anspruch, **dadurch gekennzeichnet, dass** in dem Übergabebereich (6) die Transportträger (T2) sich auf einer niedrigeren Temperatur als die Transportträger (T1) befinden.

3. Vorrichtung nach einem der vorhergehenden Ansprüche, **dadurch gekennzeichnet, dass** die Transportträger (T1) der ersten Wagenkette (W1) Biegeformen mit der Gestalt eines Rahmens mit einer Kontaktfläche für das Biegen von Glasscheiben durch die Wirkung der Schwerkraft sind.

4. Vorrichtung nach dem vorhergehenden Anspruch, **dadurch gekennzeichnet, dass** die Transportträger (T1) der ersten Wagenkette (W1) Vorbiegeformen mit der Gestalt eines Rahmens sind.

5. Vorrichtung nach einem der zwei vorhergehenden Ansprüche, **dadurch gekennzeichnet, dass** die Kontaktflächen der Biege- oder Vorbiegeformen mit der Gestalt eines Rahmens mit einer veränderlichen Gestalt ausgeführt sind, wobei die Gestaltveränderung insbesondere auf ihrem Weg durch den Ofenabschnitt (2) gesteuert werden kann.

6. Vorrichtung nach einem der vorhergehenden Ansprüche, **dadurch gekennzeichnet, dass** die Kontaktfläche der Transportträger (T2) der zweiten Wagenkette (W2) die Gestalt der fertig gebogenen Glasscheiben hat.

7. Vorrichtung nach einem der vorhergehenden Ansprüche, **dadurch gekennzeichnet, dass** in dem Übergabebereich (6) Biegewerkzeuge (F1, FU) vorgesehen sind.

8. Vorrichtung nach einem der vorhergehenden Ansprüche, **dadurch gekennzeichnet, dass** sich die Transportträger (T1) der ersten Wagenkette (W1) in dem Übergabebereich (6) unter eine obere Form (F1), die mit Mitteln (9) ausgestattet ist, um die Glasscheiben an deren Rand anzusaugen, bewegen lassen, um die Glasscheiben ausgehend von einem Transportträger (T1) durch Anheben und Halten zu übergeben.

9. Vorrichtung nach dem vorhergehenden Anspruch, **dadurch gekennzeichnet, dass** die obere Form (F1) konvex ist und als Biegewerkzeug für das Biegen der Glasscheiben dient.

10. Vorrichtung nach einem der zwei vorhergehenden Ansprüche, **dadurch gekennzeichnet, dass** eine konkave untere Form (FU) unter der die Glasscheiben haltenden oberen Form (F1) positioniert werden kann, wobei die untere Form (FU) und die obere Form (F1) in Bezug aufeinander derart beweglich sind, dass die Glasscheiben zwischen ihnen gepresst werden können.

11. Vorrichtung nach einem der vorhergehenden Ansprüche, **dadurch gekennzeichnet, dass** die Transportträger (T2) der zweiten Wagenkette (W2) unter eine obere Form (F1, F2) bewegbar sind, die mit Mitteln (9) zum Ansaugen der Glasscheiben an deren Rand ausgestattet ist, um die Glasscheiben zu halten und auf die Transportträger (T2) zu übergeben.

12. Vorrichtung nach dem vorhergehenden Anspruch, **dadurch gekennzeichnet, dass** eine obere Form (F1) in eine erste Position über einem Transportwagen (T1) der ersten Wagenkette (W1) und in eine zweite Position über einem Transportwagen (T2) der zweiten Wagenkette (W2) horizontal bewegbar ist.

13. Vorrichtung nach Anspruch 10, **dadurch gekennzeichnet, dass** zwei voneinander verschiedene obere Formen (F1, F2) vorgesehen sind.

14. Vorrichtung nach dem vorhergehenden Anspruch, **dadurch gekennzeichnet, dass**
- die zwei Formen (F1, F2) einander benachbart sind,
- eine konkave untere Form (FU) vorgesehen ist,
- die konkave untere Form (FU) abwechselnd unter die oberen Formen (F1, F2) positioniert werden kann und
- die untere Form (FU) und eine der oberen Formen (F1, F2) in Bezug aufeinander derart beweglich sind, dass die Glasscheiben zwischen ihnen gepresst und/oder auf einen Transportträger (T2) übergeben und/oder von einem Transportträger (T1) aufgenommen werden können.

15. Vorrichtung nach einem der Ansprüche 9 bis 13, **dadurch gekennzeichnet, dass** die konkave untere Form (FU) eine volle Oberfläche hat und mit Mitteln versehen ist, um die Glasscheiben auf ihrer Biegefläche (110) anzusaugen.

16. Verfahren zum Biegen mindestens einer Glasscheibe, das die Stufen:
- Ablegen der Glasscheiben auf einen Transportträger (T1) einer ersten Wagenkette (W1), die zwischen einem Aufgabebereich (3) und einem Übergabebereich (6) umläuft,
- Erhitzen der Glasscheiben auf Biegetemperatur und ihr Biegen oder Vorbiegen während ihres Transportes in den Übergabebereich (6) und
- Übergeben der Glasscheiben auf einen Transportträger (T2) einer zweiten Wagenkette (W2), der sich von dem ersten Transportträger (T1) unterscheidet, wobei die zweite Wagenkette (W2) zwischen dem Übergabebereich (6) und einer Entnahmestation (8) durch einen abschließenden Kühlabschnitt (7) läuft,
umfasst.

17. Verfahren nach dem vorhergehenden Anspruch, **dadurch gekennzeichnet, dass** in dem Übergabebereich (6) der Transportträger (T2) sich auf einer niedrigeren Temperatur als der Transportträger (T1) befindet.

18. Verfahren nach dem vorhergehenden Anspruch, **dadurch gekennzeichnet, dass** die Temperaturdifferenz zwischen dem Transportträger (T2) und dem Transportträger (T1), der sich jeweils in dem Übergabebereich befindet, 100 °C bis 250 °C beträgt.

19. Verfahren nach einem der vorhergehenden Verfahrensansprüche, **dadurch gekennzeichnet, dass** der abschließende Kühlabschnitt dazu dient, die Glasscheibe auf eine Temperatur abzukühlen, die niedriger als die Biegetemperatur ist.

20. Verfahren nach einem der vorhergehenden Verfahrensansprüche, **dadurch gekennzeichnet, dass** die Glasscheiben mittels mindestens eines weiteren Biegewerkzeugs (F1, FU), das in dem Übergabebereich (6) angeordnet ist, gebogen werden.

21. Verfahren nach einem der vorhergehenden Verfahrensansprüche, **dadurch gekennzeichnet, dass** die Glasscheiben von dem ersten Transportträger (T1) auf den zweiten Transportträger (T2) und/oder von dem ersten Transportträger (T1) auf das Biegewerkzeug (FU) und/oder von dem Biegewerkzeug (FU) auf den zweiten Transportträger (T2) durch Ansaugung der Glasscheiben an deren Rand übergeben werden.

22. Verfahren nach einem der zwei vorhergehenden Ansprüche, **dadurch gekennzeichnet, dass** die Glasscheiben auf ihrem Weg zwischen dem Aufgabebereich (3) und dem Übergabebereich (6) auf einer Biegeform mit der Gestalt eines Rahmens vorgebogen und in dem Übergabebereich (6) auf ihre endgültige Gestalt gebogen werden.

23. Verfahren nach einem der vorhergehenden Verfahrensansprüche, **dadurch gekennzeichnet, dass** die Glasscheibe in dem Übergabebereich (6) durch Ansaugung auf einer konkaven unteren Form (FU) mit voller Oberfläche auf ihre endgültige Gestalt gebogen wird.

24. Verfahren nach einem der vorhergehenden Verfahrensansprüche, **dadurch gekennzeichnet, dass** zwei Glasscheiben, die aufeinander liegen und sich genau bedecken, zeitgleich gebogen werden.
